(19) Europäisches Patentamt
European Patent Office
Office européen des brevets

(11) Veröffentlichungsnummer : **0 380 986 B1**

(12) **EUROPÄISCHE PATENTSCHRIFT**

(45) Veröffentlichungstag der Patentschrift :
**16.06.93 Patentblatt 93/24**

(51) Int. Cl.$^5$ : **A01N 43/84,** A01N 33/06, A01N 43/40

(21) Anmeldenummer : **90101131.2**

(22) Anmeldetag : **20.01.90**

# (54) Fungizide Mischung.

(30) Priorität : **28.01.89 DE 3902509**

(43) Veröffentlichungstag der Anmeldung :
**08.08.90 Patentblatt 90/32**

(45) Bekanntmachung des Hinweises auf die Patenterteilung :
**16.06.93 Patentblatt 93/24**

(84) Benannte Vertragsstaaten :
**AT BE CH DE DK ES FR GB GR IT LI NL SE**

(56) Entgegenhaltungen :
**EP-A- 0 048 997**
**EP-A- 0 111 736**
**EP-A- 0 193 922**
**EP-A- 0 237 483**
**DD-A- 157 592**
**DD-A- 229 297**
**GB-A- 2 169 807**

(73) Patentinhaber : **BASF Aktiengesellschaft**
**Carl-Bosch-Strasse 38**
**W-6700 Ludwigshafen (DE)**

(72) Erfinder : **Zipplies, Matthias, Dr.**
**Kastanienweg 1**
**W-6945 Hirschberg (DE)**
Erfinder : **Sauter, Hubert, Dr.**
**Neckarpromenade 20**
**W-6800 Mannheim 1 (DE)**
Erfinder : **Gold, Randall Evan, Dr.**
**Hintergasse 7 b**
**W-6706 Wachenheim (DE)**
Erfinder : **Akers, Alan**
**Truebener Strasse 5**
**W-6900 Heidelberg (DE)**
Erfinder : **Ammermann, Eberhard, Dr.**
**Sachsenstrasse 3**
**W-6700 Ludwigshafen (DE)**
Erfinder : **Lorenz, Gisela, Dr.**
**Erlenweg 13**
**W-6730 Neustadt (DE)**

**EP 0 380 986 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft fungizide Mischungen für den Pflanzenschutz, die eine Mischung von mindestens zwei Wirkstoffen enthalten. N-Tridecyl-2,6-dimethylmorpholin (Tridemorph) ist ein bekanntes Fungizid (US-3 468 885).

Es ist weiterhin bekannt, N-[3-(p-tertiär-Butylphenyl)-2-methylpropyl]-cis-2,6-dimethylmorpholin (Fenpropimorph) sowie N-[-3-(p-tert.-Butyl-phenyl)-2-methylpropyl]-piperidin (Fenpropidin) als Fungizid zu verwenden (DE-2 656 747.5).

Es ist ferner bekannt, Aminoderivate z.B. das N-Methyl-N-allylphenylnaphthyl-1-methylamin zur Bekämpfung von Pilzen in der Medizin zu verwenden (DE-2 716 943).

Es wurde nun gefunden, daß eine fungizide Mischung aus

a) einer Verbindung der Formel I

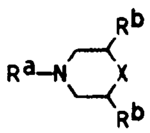

I

in der

$R^a$ = Tridecyl ($C_{13}H_{27}$-Isomerengemisch), 3(p-tert.-Butyl(phenyl)-2-methylpropyl,

$R^b$ = H, $CH_3$ (cis- bzw. trans-ständig) und

X = 0, $CH_2$ bedeutet

und

b) einer Verbindung der Formel II

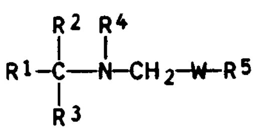

II

in der

$R^1$ gegebenenfalls einfach bis dreifach durch $C_1$-$C_4$-Alkyl, $C_2$-$C_4$-Alkenyl-, $C_3$-$C_4$-Alkinyl, $C_2$-$C_6$-Alkoxyalkyl, Halogen, Hydroxy, $C_1$-$C_4$-Alkoxy, Cyano substituiertes Phenyl, Naphthyl, Tetrahydronaphthyl, Benzothiophenyl, Benzofuranyl, Anthracenyl, Acenaphthenyl, Hexahydroindacenyl, Tetrahydrophenanthrenyl, Stilbenyl, Benzodioxolanyl,

$R^2$ Wasserstoff, Methyl

$R^3$ Wasserstoff

$R^4$ $C_1$-C3-Alkyl, Cyclopropyl, $C_2$-Halogenalkyl, $C_3$-Alkenyl

W einen $C_2$-Alkenylenrest, $C_2$-Fluor-alkenylenrest oder eine Einfachbindung,

$R^5$ gegebenenfalls einfach bis dreifach durch Halogen, $C_1$-$C_4$-Alkyl, Hydroxy, $C_1$-$C_5$-Alkoxy substituiertes Phenyl, Naphthyl, gegebenenfalls einfach bis dreifach durch Hydroxy, $C_1$-$C_5$-Alkoxy, $C_3$-$C_6$-Cycloalkyl, Aryl, Thiophenyl, Cyano, Halogen substituiertes $C_3$-C8-Alkenyl oder $C_3$-$C_8$-Alkinyl bedeutet, eine gute fungizide Wirkung hat.

Das Mischungsverhältnis a) zu b) wird so gewählt, daß eine synergistische Wirkung auftritt, beispielsweise im Gewichtsverhältnis a) zu b) wie 1:100 bis 10:1, insbesondere 1:20 bis 5:1, vorzugsweise 1:10 bis 2:1. Die Mischungsverhältnisse 1:10 bis 2:1 werden bevorzugt. Ganz besonders bevorzugt werden die Mischungsverhältnisse 1:5 bis 1:1.

$R^1$ bedeutet beispielsweise $\alpha$-Naphthyl, Methylnaphthyl, Methoxynaphthyl, Dichlorphenyl

$R^4$ bedeutet beispielsweise Methyl, Ethyl

W bedeutet beispielsweise einen Ethenylenrest, oder eine Einfachbindung

$R^5$ bedeutet beispielsweise 3,3-Dimethyl-but-1-inyl, Phenyl, Naphthyl, tert.-Butyl-phenyl, Methoxyphenyl, Chlorphenyl.

Bevorzugt wird die Mischung von

a) Fenpropiomorph mit

b) der Verbindung Nr. 1, insbesondere das Gewichtsverhältnis a:b wie 1:1.

Geeignete Wirkstoffe der Gruppe b) sind beispielsweise in der folgenden Tabelle aufgeführt.

Tabelle:

Verbindungen b

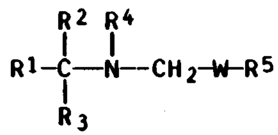 II

| Nr. | $R^1$ | $R^2$ | $R^3$ | $R^4$ | W | $R^5$ | Bekannt aus (s. Fußnoten) |
|---|---|---|---|---|---|---|---|
| 1 | α-Naphthyl | H | H | $CH_3$ | 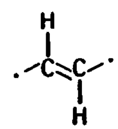 (trans-Ethenylen) | 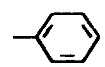 | 1, 2 |
| 2 | α-Naphthyl | H | H | $CH_3$ | trans-Ethenylen | 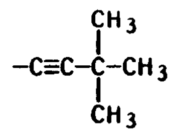 | 3 |
| 3 | α-Naphthyl | H | H | $CH_3$ | trans-Ethenylen | 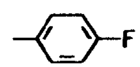 | 1 |
| 4 | α-Naphthyl | H | H | $CH_3$ | trans-Ethenylen | 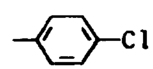 | 1 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 5 | α-Naphthyl | H | H | $CH_3$ | trans-Ethenylen | 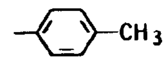 | 1 |
| 6 | α-Naphthyl | H | H | $CH_3$ | trans-Ethenylen | 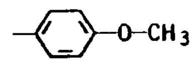 | 1 |
| 7 | α-Naphthyl | H | H | $CH_3$ | trans-Ethenylen | 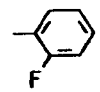 | 1 |
| 8 | α-Naphthyl | H | H | $CH_3$ | trans-Ethenylen | 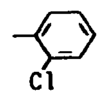 | 1 |
| 9 | α-Naphthyl | H | H | $CH_3$ | trans-Ethenylen | 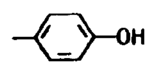 | 2 |
| 10 | α-Naphthyl | H | H | i-Propyl | trans-Ethenylen | 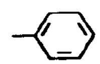 | 2 |
| 11 | α-Naphthyl | H | H | Allyl | trans-Ethenylen | 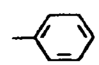 | 2 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 12 | 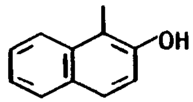 | H | H | $CH_3$ | trans-Ethenylen | 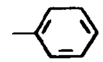 | 2 |
| 13 | 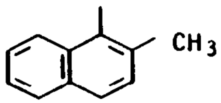 | H | H | $CH_3$ | trans-Ethenylen | 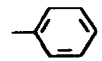 | 2 |
| 14 | 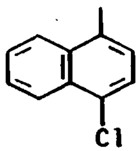 | H | H | $CH_3$ | trans-Ethenylen | 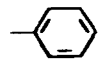 | 2 |
| 15 | 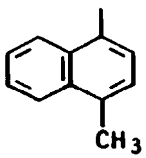 | H | H | $CH_3$ | trans-Ethenylen | 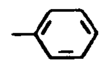 | 2 |
| 16 | 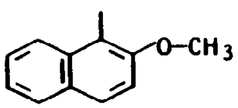 | H | H | $CH_3$ | trans-Ethenylen | 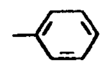 | 2 |
| 17 | 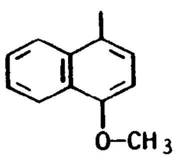 | H | H | $CH_3$ | trans-Ethenylen | 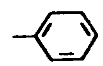 | 2 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 18 | 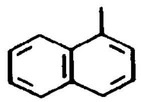 | $CH_3$ | H | $CH_3$ | trans-Ethenylen | 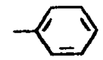 | 2 |
| 19 | 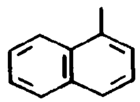 | H | H | $CH_3$ | trans-Ethenylen | $-C{\equiv}C-(CH_2)_3-CH_3$ | 3 |
| 21 | 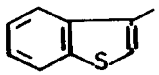 | H | H | $CH_3$ | trans-Ethenylen | 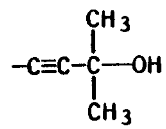 | 3 |
| 22 | 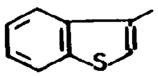 | H | H | $CH_3$ | trans-Ethenylen | $-C{\equiv}C-(CH_2)_3-CH_3$ | 3 |
| 23 | 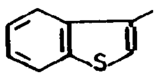 | H | H | $CH_3$ | trans-Ethenylen | $-C{\equiv}C-(CH_2)_3-CH_3$ | 3 |
| 24 | 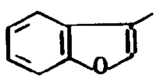 | H | H | $CH_3$ | trans-Ethenylen | $-C{\equiv}C-(CH_2)_3-CH_3$ | 3 |
| 25 | 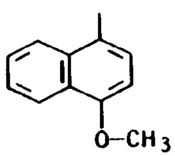 | H | H | $CH_3$ | trans-Ethenylen | 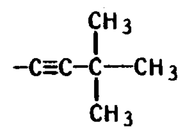 | 3 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 26 | 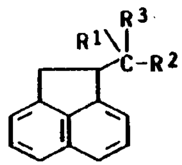 | | | $CH_3$ | trans-Ethenylen | 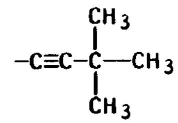 | 3 |
| 27 | 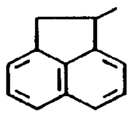 | H | H | $CH_3$ | trans-Ethenylen | 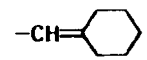 | 3 |
| 28 | 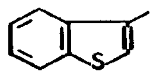 | H | H | $CH_3$ | trans-Ethenylen | 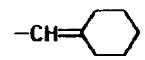 | 3 |
| 29 | 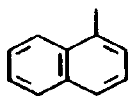 | H | H | $CH_3$ | trans-Ethenylen | $-C{\equiv}C-(CH_2)_3-CH_3$ | 3 |
| 30 | 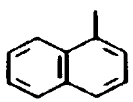 | H | H | $CH_3$ | trans-Ethenylen | 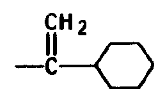 | 3 |
| 31 | 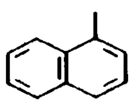 | H | H | $CH_3$ | trans-Ethenylen | 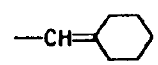 | 3 |
| 32 | 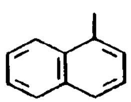 | H | H | $CH_3$ | trans-Ethenylen | $-C{\equiv}CH$ | 3 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 33 | 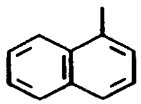 | H | $R_3$ $R_4$ N 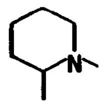 | | trans-Ethenylen | $-C \equiv CH$ | 3 |
| 34 | 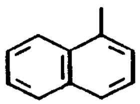 | H | H | $CH_3$ | trans-Ethenylen | 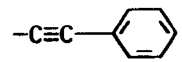 | 3 |
| 35 | 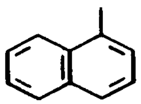 | H | H | $CH_3$ | trans-Ethenylen | 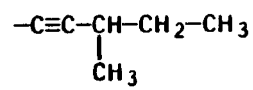 | 3 |
| 36 | 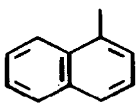 | H | H | $CH_3$ | trans-Ethenylen | 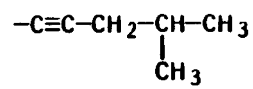 | 3 |
| 37 | 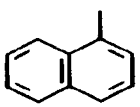 | H | H | $CH_3$ | trans-Ethenylen | 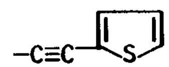 | 3 |
| 38 | 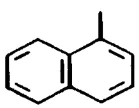 | H | H | $CH_3$ | trans-Ethenylen | 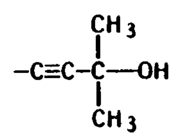 | 3 |

Tabelle 1: (Fortsetzung)

| Nr. | R1 | R2 | R3 | R4 | W | R5 | Bekannt aus |
|---|---|---|---|---|---|---|---|
| 39 | 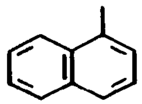 | H | H | $CH_3$ | trans-Ethenylen | 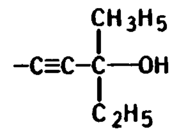 | 3 |
| 40 | 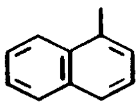 | H | H | $CH_3$ | trans-Ethenylen | 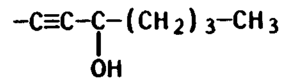 | 3 |
| 41 | 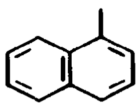 | H | H | $CH_3$ | trans-Ethenylen | 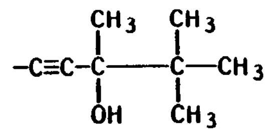 | 3 |
| 42 | 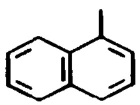 | H | H | $CH_3$ | trans-Ethenylen | $-C{\equiv}C-(CH_2)_4-CH_3$ | 3 |
| 43 | 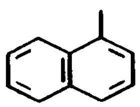 | H | H | $CH_3$ | trans-Ethenylen | 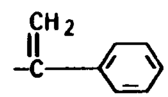 | 3 |
| 44 | 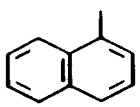 | H | H | $CH_3$ | trans-Ethenylen | 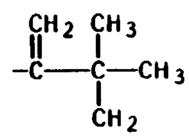 | 3 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 45 | 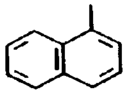 | H | H | $CH_3$ | trans-Ethenylen | 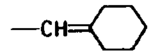 | 3 |
| 46 | 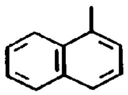 | H | H | $CH_3$ | trans-Ethenylen | $-C\equiv C-CH_2OH$ | 3 |
| 47 | 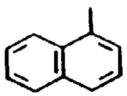 | H | H | $CH_3$ | trans-Ethenylen | 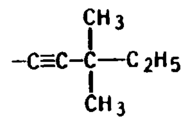 | 3 |
| 48 | 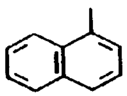 | H | H | $CH_3$ | trans-Ethenylen | 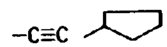 | 3 |
| 49 | 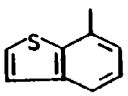 | H | H | $CH_3$ | trans-Ethenylen | 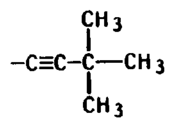 | 4 |
| 50 | 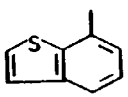 | H | H | $CH_3$ | trans-Ethenylen | 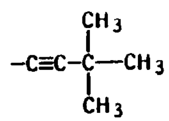 | 4 |
| 51 | 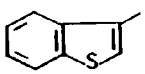 | H | H | $CH_3$ | trans-Ethenylen | 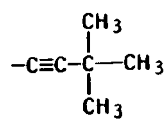 | 4 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 52 | 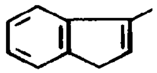 | H | H | $CH_3$ | trans-Ethenylen | 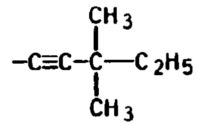 | 4 |
| 53 | 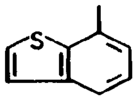 | H | H | $CH_3$ | trans-Ethenylen | 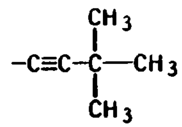 | 4 |
| 54 | 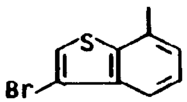 | H | H | $CH_3$ | trans-Ethenylen | 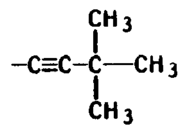 | 4 |
| 55 | 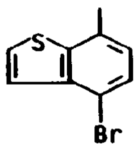 | H | H | $CH_3$ | trans-Ethenylen | 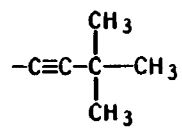 | 4 |
| 56 | 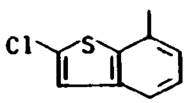 | H | H | $CH_3$ | trans-Ethenylen | 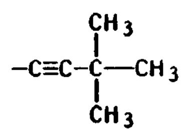 | 4 |
| 57 | 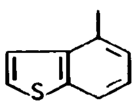 | H | H | $CH_3$ | trans-Ethenylen | 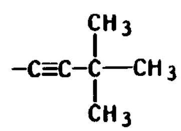 | 4 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 58 | 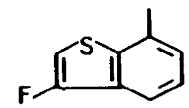 | H | H | $CH_3$ | trans-Ethenylen | 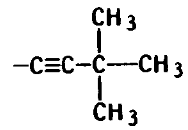 | 4 |
| 59 | 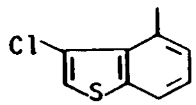 | H | H | $CH_3$ | trans-Ethenylen | 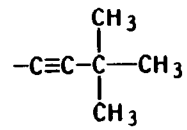 | 4 |
| 60 | 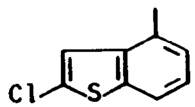 | H | H | $CH_3$ | trans-Ethenylen | 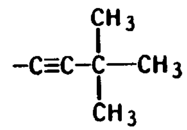 | 4 |
| 61 | 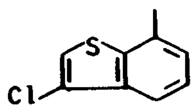 | H | H | $CH_3$ | trans-Ethenylen | 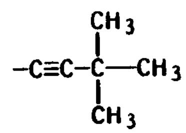 | 4 |
| 62 | 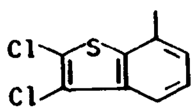 | H | H | $CH_3$ | trans-Ethenylen | 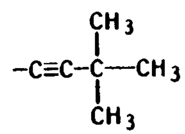 | 4 |
| 63 | 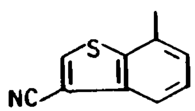 | H | H | $CH_3$ | trans-Ethenylen | 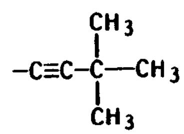 | 4 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 64 | 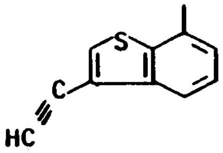 | H | H | $CH_3$ | trans-Ethenylen | 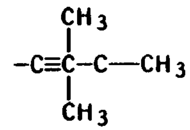 | 4 |
| 65 | 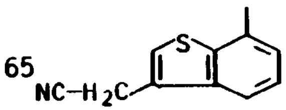 | H | H | $CH_3$ | trans-Ethenylen | 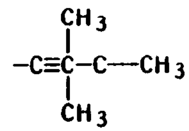 | 4 |
| 66 | 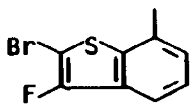 | H | H | $CH_3$ | trans-Ethenylen | 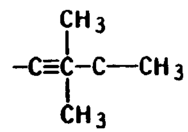 | 4 |
| 67 | 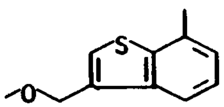 | H | H | $CH_3$ | trans-Ethenylen | 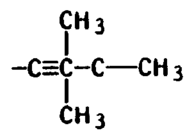 | 4 |
| 68 | α-Naphthyl | H | H | $CH_3$ | trans-Ethenylen | 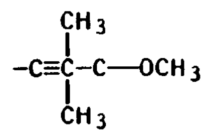 | 5 |
| 69 | 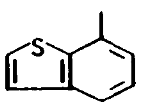 | H | H | $CH_3$ | trans-Ethenylen | 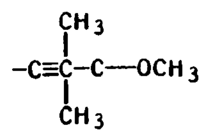 | 5 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 70 | 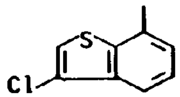 | H | H | $CH_3$ | trans-Ethenylen | 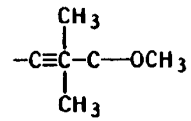 | 5 |
| 71 | α-Naphthyl | H | H | $CH_3$ | trans-Ethenylen | 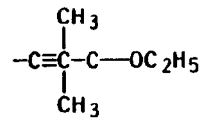 | 5 |
| 72 | 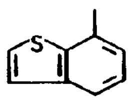 | H | H | $CH_3$ | trans-Ethenylen | 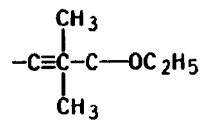 | 5 |
| 73 | α-Naphthyl | H | H | $CH_3$ | trans-Ethenylen | 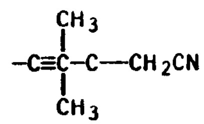 | 5 |
| 74 | α-Naphthyl | H | H | $CH_3$ | trans-Ethenylen | 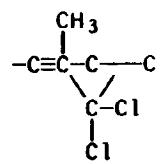 | 5 |
| 75 | α-Naphthyl | H | H | $CH_3$ | trans-Ethenylen | 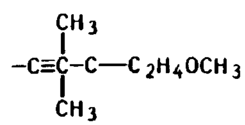 | 5 |

Tabelle 1: (Fortsetzung)

| Nr. | R¹ | R² | R³ | R⁴ | W | R⁵ | Bekannt aus |
|---|---|---|---|---|---|---|---|
| 76 | 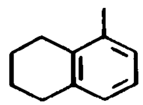 | H | H | $CH_3$ | trans-Ethenylen | 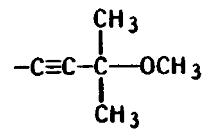 | 5 |
| 77 | α-Naphthyl | H | H | $CH_3$ | trans-Ethenylen | 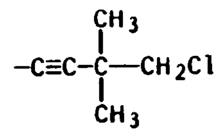 | 5 |
| 78 | α-Naphthyl | =O | | $CH_3$ | trans-Ethenylen | 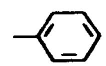 | 6 |
| 79 | 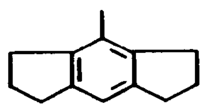 | H | H | $CH_3$ | trans-Ethenylen | 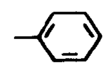 | 7 |
| 80 | 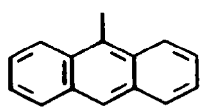 | H | H | $CH_3$ | trans-Ethenylen | 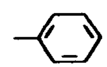 | 7 |
| 81 | α-Naphthyl | H | H | $CH_3$ | trans-Ethenylen | 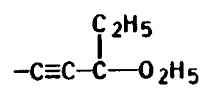 | 8 |
| 82 | α-Naphthyl | H | H | $CH_3$ | trans-Ethenylen | $-CH=CH-(CH_2)_4-CH_3$ | 8 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 83 | α-Naphthyl | H | H | $CH_3$ | trans-Ethenylen | 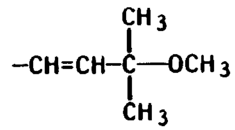 | 8 |
| 84 | α-Naphthyl | H | H | $CH_3$ | trans-Ethenylen | 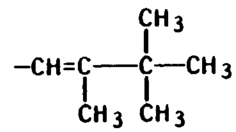 | 8 |
| 85 | α-Naphthyl | H | $R^3$, $R^4$, N 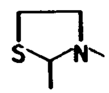 | | trans-Ethenylen | 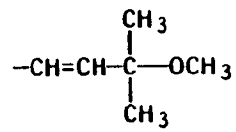 | 9 |
| 86 | α-Naphthyl | H | H | $CH_3$ | trans-Ethenylen | $-C{\equiv}C-(CH_2)_3-CH_3$ | 9 |
| 87 | 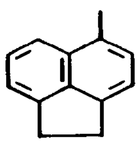 | H | $R^3$, $R^4$, N 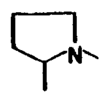 | | trans-Ethenylen | 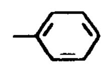 | 9 |
| 88 | 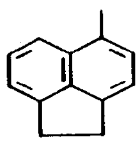 | H | H | $CH_3$ | trans-Ethenylen | 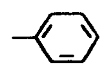 | 9 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 89 | 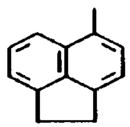 | H | H | $CH_3$ | trans-Ethenylen | 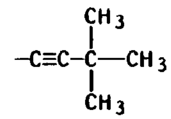 | 9 |
| 90 | 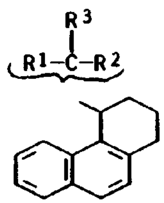 | | | $CH_3$ | trans-Ethenylen | 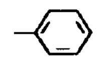 | 9 |
| 91 | 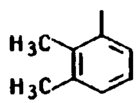 | H | H | $CH_3$ | trans-Ethenylen | 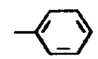 | 10 |
| 92 | 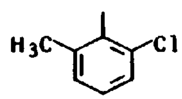 | H | H | $CH_3$ | trans-Ethenylen | 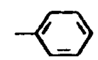 | 10 |
| 93 | 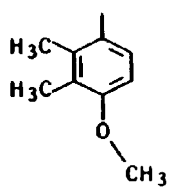 | H | H | $CH_3$ | trans-Ethenylen | 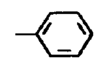 | 10 |
| 94 | 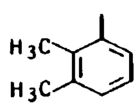 | H | 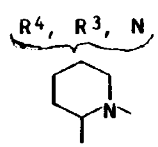 | | trans-Ethenylen | 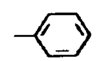 | 10 |

Tabelle 1: (Fortsetzung)

| Nr. | R1 | R2 | R3 | R4 | W | R5 | Bekannt aus |
|---|---|---|---|---|---|---|---|
| 95 | 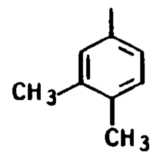 | H | H | $CH_3$ | trans-Ethenylen | 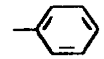 | 10 |
| 96 | 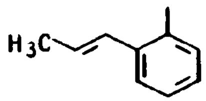 | H | H | $CH_3$ | trans-Ethenylen | 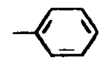 | 10 |
| 97 | 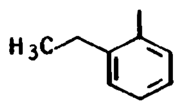 | H | H | $CH_3$ | trans-Ethenylen | 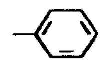 | 10 |
| 98 | 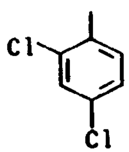 | H | H | $CH_3$ | trans-Ethenylen | 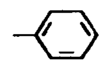 | 10 |
| 99 | 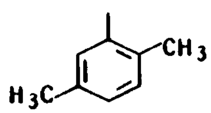 | H | H | $CH_3$ | trans-Ethenylen | 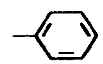 | 10 |
| 100 | 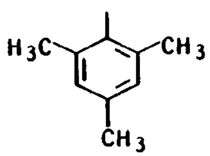 | H | H | $CH_3$ | trans-Ethenylen | 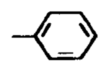 | 10 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 101 | 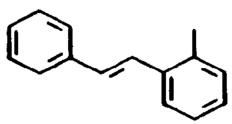 | H | H | $CH_3$ | trans-Ethenylen | 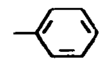 | 10 |
| 102 | α-Naphthyl | H | H | $CH_3$ | $CH_2$ | 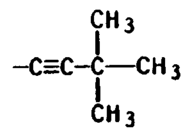 | 11 |
| 103 | α-Naphthyl | H | H | $CH_3$ | $CH_2$ | 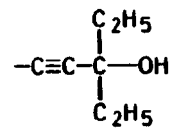 | 11 |
| 104 | α-Naphthyl | H | H | $CH_3$ | $CH_2$ | 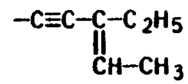 | 11 |
| 105 | α-Naphthyl | H | H | $CH_3$ | trans-Ethenylen | 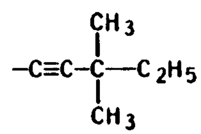 | 12 |
| 106 | α-Naphthyl | H | H | $CH_3$ | $CH_2$ | 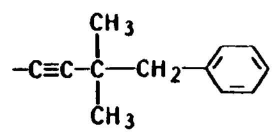 | 12 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 107 | α-Naphthyl | H | H | $CH_3$ | $CH_2$ | 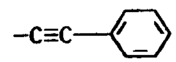 | 13 |
| 108 | α-Naphthyl | H | H | $CH_3$ | $CH_2$ | 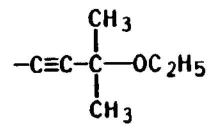 | 13 |
| 109 | α-Naphthyl | H | H | $CH_3$ | $CH_2$ | 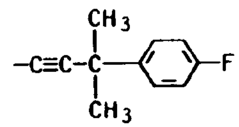 | 13 |
| 110 | α-Naphthyl | H | H | $CH_3$ | $-CH_2-CH_2-$ | 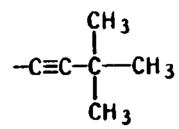 | 13 |
| 111 | α-Naphthyl | H | H | $CH_3$ | 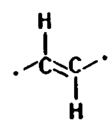 (trans-Ethenylen) | 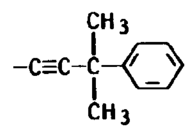 | 14 |
| 112 | α-Naphthyl | H | H | $CH_3$ | trans-Ethenylen | 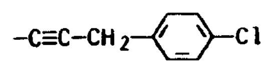 | 14 |
| 113 | α-Naphthyl | H | H | $CH_3$ | trans-Ethenylen | 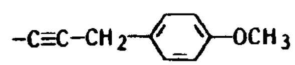 | 14 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 114 | α-Naphthyl | H | H | $CH_3$ | trans-Ethenylen | 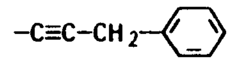 | 14 |
| 115 | α-Naphthyl | H | H | $CH_3$ | trans-Ethenylen | 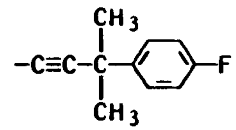 | 14 |
| 116 | α-Naphthyl | H | H | $CH_3$ | trans-Ethenylen | 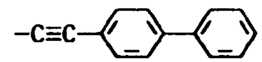 | 14 |
| 117 | α-Naphthyl | H | H | $CH_3$ | trans-Ethenylen | 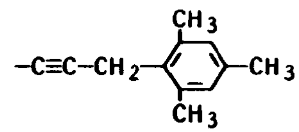 | 14 |
| 118 | α-Naphthyl | H | H | $CH_3$ | 1-Fluor-trans-Ethenylen | 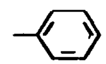 | 15 |
| 119 | α-Naphthyl | H | H | $CH_3$ | 2-Fluor-trans-Ethenylen | 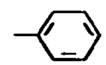 | 15 |
| 120 | α-Naphthyl | H | H | $CH_3$ | 1-Fluor-trans-Ethenylen | 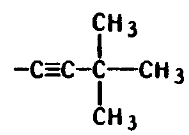 | 15 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 121 | α-Naphthyl | H | H | $CH_3$ | 2-Fluor-trans-Ethenylen | 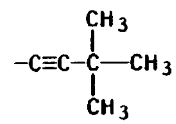 | 15 |
| 122 | 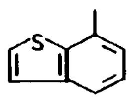 | H | H | $CH_3$ | 1-Fluor-trans-Ethenylen | 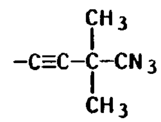 | 15 |
| 123 | 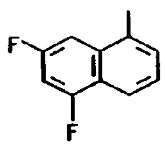 | H | H | $CH_3$ | - | 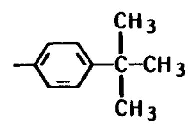 | 16 |
| 124 | α-Naphthyl | H | H | $CH_3$ | - | 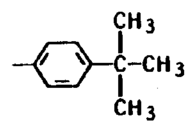 | 16 |
| 125 | α-Naphthyl | H | H | $CH_3$ | - | 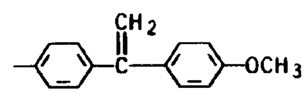 | 16 |
| 126 | α-Naphthyl | H | H | $CH_3$ | - | 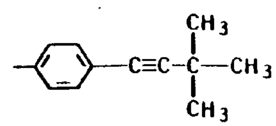 | 16 |
| 127 | α-Naphthyl | H | H | $CH_3$ | - | 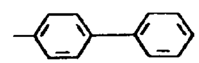 | 16 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 128 | α-Naphthyl | H | H | $CH_3$ | - | 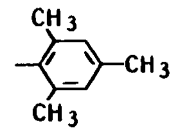 | 16 |
| 129 | 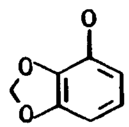 | H | H | $CH_3$ | - | 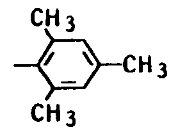 | 16 |
| 130 | α-Naphthyl | H | $R^3$, $R^4$, N 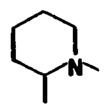 | | - | 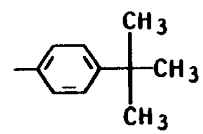 | 16 |
| 131 | α-Naphthyl | H | H | $CH_3$ | - | 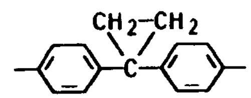 | 16 |
| 132 | 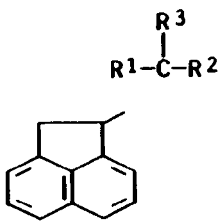 | | | $CH_3$ | - | 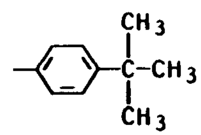 | 16 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 133 | α-Naphthyl | H | H | $CH_3$ | - | 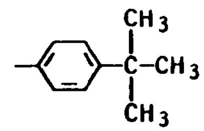 | 16 |
| 134 | α-Naphthyl | H | H | Cyclopropyl | - | 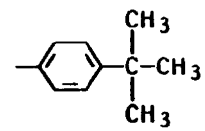 | 16 |
| 135 | α-Naphthyl | H | H | $CH_3$ | - | 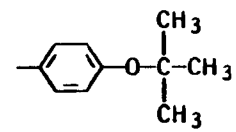 | 16 |
| 136 | α-Naphthyl | H | H | $-CH_2-CH_2F$ | - | 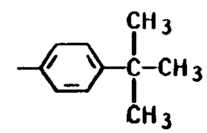 | 16 |
| 137 | α-Naphthyl | H | H | $CH_3$ | - | 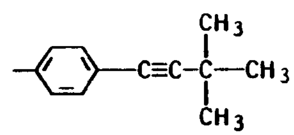 | 16 |
| 138 | α-Naphthyl | H | H | $CH_3$ | - | 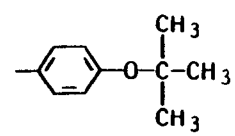 | 16 |

Tabelle 1: (Fortsetzung)

| Nr. | R¹ | R² | R³ | R⁴ | W | R⁵ | Bekannt aus |
|---|---|---|---|---|---|---|---|
| 139 | α-Naphthyl | H | H | $CH_3$ | - | 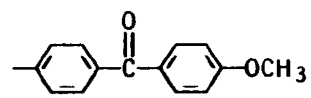 | 16 |
| 140 | α-Naphthyl | H | H | $CH_3$ | - | 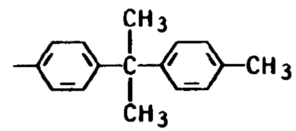 | 16 |
| 141 | α-Naphthyl | H | H | $CH_3$ | - | 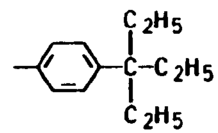 | 16 |
| 142 | 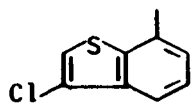 | H | H | $CH_3$ | - | 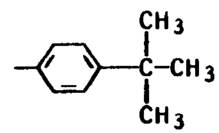 | 16 |
| 143 | α-Naphthyl | H | H | $C_2H_5$ | - | 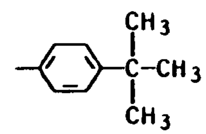 | 16 |
| 144 | α-Naphthyl | H | H | $CH_3$ | - | 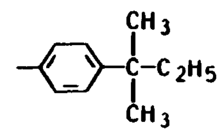 | 16 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 145 | α-Naphthyl | H | H | $CH_3$ | - | 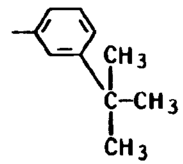 | 16 |
| 146 | α-Naphthyl | H | H | $CH_3$ | - | 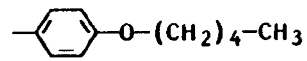 | 16 |
| 147 | 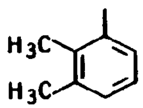 | H | H | $CH_3$ | - | 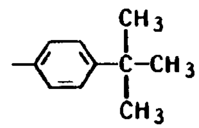 | 16 |
| 148 | 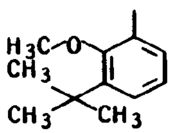 | H | H | $CH_3$ | - | 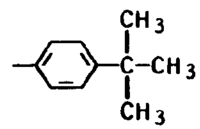 | 16 |
| 149 | 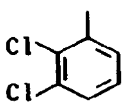 | H | H | $CH_3$ | - | 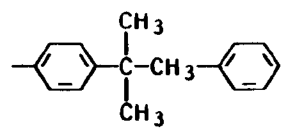 | 16 |
| 150 | 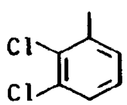 | H | H | $CH_3$ | - | 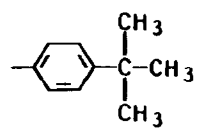 | 16 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 151 | α-Naphthyl | H | H | $CH_3$ | - | 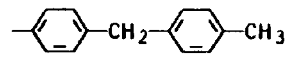 | 16 |
| 152 | α-Naphthyl | H | H | $CH_3$ | - | 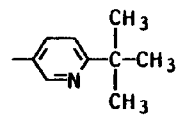 | 16 |
| 153 | α-Naphthyl | H | H | $CH_3$ | - | β-Naphthyl | 17 |
| 154 | α-Naphthyl | H | H | $CH_3$ | - | α-Naphthyl | 17 |
| 155 | 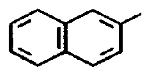 | H | H | $CH_3$ | - | β-Naphthyl | 17 |
| 156 | 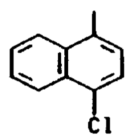 | H | H | $CH_3$ | - | 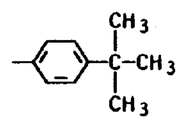 | 18 |
| 157 | 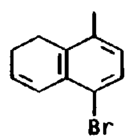 | H | H | $CH_3$ | - | 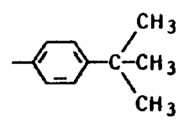 | 18 |
| 158 | 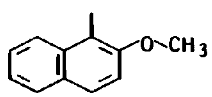 | H | H | $CH_3$ | - | 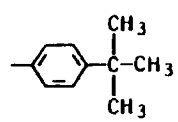 | 18 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 159 | 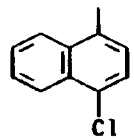 | H | H | $CH_3$ | - | α-Naphthyl | 18 |
| 160 | 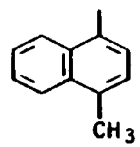 | H | H | $CH_3$ | - | β-Naphthyl | 18 |
| 161 | α-Naphthyl | H | H | $C_2H_5$ | - | α-Naphthyl | 18 |
| 162 | α-Naphthyl | H | H | $C_2H_5$ | - | β-Naphthyl | 18 |
| 163 | α-Naphthyl | H | H | $n-C_3H_7$ | | | 18 |
| 164 | α-Naphthyl | H | H | $n-C_4H_9$ | - | β-Naphthyl | 17 |
| 165 | α-Naphthyl | H | H | $n-C_4H_9$ | - | β-Naphthyl | 17 |
| 166 | α-Naphthyl | H | H | i-Propyl | - | 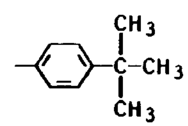 | 19 |
| 167 | α-Naphthyl | H | H | Allyl | - | 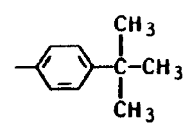 | 19 |

Tabelle 1: (Fortsetzung)

| Nr. | $R^1$ | $R^2$ | $R^3$ | $R^4$ | W | $R^5$ | Bekannt aus |
|---|---|---|---|---|---|---|---|
| 168 | 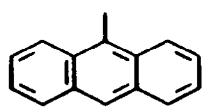 | H | H | $CH_3$ | - | 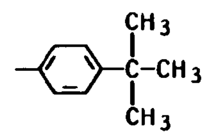 | 19 |

Fußnoten:

1) DE 2716943
2) DE 2809211
3) EP 0024587
4) DE 3302814
5) DE 3316093
6) DE 3405329
7) DE 3405330
8) DE 3405332
9) DE 3405444
10) DE 3405334
11) DE 3442529
12) DE 3528736
13) EP 0191269
14) EP 0254677
15) DE 3631297
16) DE 3702039
17) J 6 0172-919-A
18) EP 0164697
19) EP 0221781

Die neuen Mischungen zeichnen sich, allgemein ausgedrückt, durch eine hervorragende Wirksamkeit gegen ein breites Spektrum von pflanzenpathogenen Pilzen, insbesondere aus der Klasse der Ascomyceten und Basidiomyceten, aus. Sie sind zum Teil systemisch wirksam und können als Blatt- und Bodenfungizide eingesetzt werden.

Besonders interessant sind die fungiziden Mischungen für die Bekämpfung einer Vielzahl von Pilzen an verschiedenen Kulturpflanzen oder ihren Samen, insbesondere Weizen, Roggen, Gerste, Hafer, Reis, Mais, Rasen, Baumwolle, Soja, Kaffee, Zuckerrohr, Obst und Zierpflanzen im Gartenbau, Weinbau sowie Gemüse - wie Gurken, Bohnen und Kürbisgewächse -.

Die neuen Mischungen sind insbesondere geeignet zur Bekämpfung folgender Pflanzenkrankheiten:
Erysiphe graminis (echter Mehltau) in Getreide,
Erysiphe cichoracearum und Sphaerotheca fuliginea an Kürbisgewächsen,
Podosphaera leucotricha an Äpfeln,
Uncinula necator an Reben,
Puccinia-Arten an Getreide,
Rhizoctonia-Arten an Baumwolle und Rasen,
Ustilago-Arten an Getreide und Zuckerrohr,
Venturia inaequalis (Schorf) an Äpfeln,
Helminthosporium-Arten an Getreide,
Septoria nodorum an Weizen,
Botrytis cinerea (Grauschimmel) an Erdbeeren, Reben,
Cercospora arachidicola an Erdnüssen,
Pseudocercosporella herpotrichoides an Weizen, Gerste,
Pyricularia oryzae an Reis,
Phytophthora infestans an Kartoffeln und Tomaten,
Fusarium- und Verticillium-Arten an verschiedenen Pflanzen,
Plasmopara viticola an Reben,
Alternaria-Arten an Gemüse und Obst.

Die Mischungen werden angewendet, indem man die Pflanzen mit den Wirkstoffen besprüht oder bestäubt oder die Samen der Pflanzen mit den Wirkstoffen behandelt. Die Anwendung erfolgt vor oder nach der Infektion

der Pflanzen oder Samen durch die Pilze.

Die Mischungen können in die üblichen Formulierungen übergeführt werden, wie Lösungen, Emulsionen, Suspensionen, Stäube, Pulver, Pasten und Granulate. Die Anwendungsformen richten sich ganz nach den Verwendungszwecken; sie sollen in jedem Fall eine feine und gleichmäßige Verteilung der wirksamen Substanz gewährleisten. Die Formulierungen werden in bekannter Weise hergestellt, z.B. durch Verstrecken des Wirkstoffs mit Lösungsmitteln und/oder Trägerstoffen, gegebenenfalls unter Verwendung von Emulgiermitteln und-Dispergiermitteln, wobei im Falle der Benutzung von Wasser als Verdünnungsmittel auch andere organische Lösungsmittel als Hilfslösungsmittel verwendet werden können. Als Hilfsstoffe kommen dafür im wesentlichen in Frage: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Wasser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel, wie nichtionogene und anionische Emulgatoren (z.B. Polyoxyethylen-Fettalkohol-Ether, Alkylsulfonate und Arylsulfonate) und Dispergiermittel, wie Lignin, Sulfitablaugen und Methylcellulose.

Die fungiziden Mittel enthalten im allgemeinen zwischen 0,1 und 95, vorzugsweise zwischen 0,5 und 90 Gew.% der Mischung a) + b).

Die Aufwandmengen liegen je nach Art des gewünschten Effektes zwischen 0,02 und 3 kg der Mischung oder mehr je ha. Die neuen Mischungen können auch im Materialschutz eingesetzt werden, z.B. gegen Paecilomyces variotii.

Die fungiziden Mittel bzw. die daraus hergestellten gebrauchsfertigen Zubereitungen, wie Lösungen, Emulsionen, Suspensionen, Pulver, Stäube, Pasten oder Granulate werden in bekannter Weise angewendet, beispielsweiise durch Versprühen, Vernebeln, Verstäuben, Verstreuen, Beizen oder Gießen.

Beispiele für solche Zubereitungen sind:

I. Man vermischt 90 Gew.-Teile der Mischung 1 mit 10 Gew.-Teilen N-Methyl-α-pyrrolidon und erhält eine Lösung, die zur Anwendung in Form kleinster Tropfen geeignet ist.

II. 20 Gew.-Teile der Mischung 1 werden in einer Mischung gelöst, die aus 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure und 5 Gew.-Teilen des Anlagerungsproduktes und 40 Mol Ethylenoxid an 1 Mol Ricinusöl besteht. Durch Ausgießen und feines Verteilen der Lösung in Wasser erhält man eine wäßrige Dispersion.

III. 20 Gew.-Teile der Mischung 1 werden in einer Mischung gelöst, die aus 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.

IV. 20 Gew.-Teile der Mischung 1 werden in einer Mischung gelöst, die aus 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl besteht. Durch Eingießen und feines Verteilen der Lösung in Wasser erhält man eine wäßrige Dispersion.

V. 80 Gew.-Teile der Mischung 1 werden mit 3 Gew.-Teilen des Natriumsalzes der Diisobutylnaphthalin-α-sulfonsäure, 10 Gew.-Teilen des Natriumsalzes einer Ligninsulfonsäure aus einer Sulfitablauge und 7 Gew.-Teilen pulverförmigem Kieselsäuregel gut vermischt und in einer Hammermühle vermahlen. Durch feines Verteilen der Mischung in Wasser erhält man eine Spritzbrühe.

VI. 3 Gew.-Teile der Mischung 1 werden mit 97 Gew.-Teilen feinteiligem Kaolin innig vermischt. Man erhält auf diese Weise ein Stäubemittel, das 3 Gew.% des Wirkstoffs enthält.

VII. 30 Gew.-Teile der Mischung 1 werden mit einer Mischung aus 92 Gew.-Teilen pulverförmigem Kieselsäuregel und 8 Gew.-Teilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

VIII. 40 Gew.-Teile der Mischung 1 werden mit 10 Gew.-Teilen Natriumsalz eines Phenolsulfonsäure-harnstoff-formaldehyd-Kondensates, 2 Gew.-Teilen Kieselgel und 48 Gew.-Teilen Wasser innig vermischt. Man erhält eine stabile wäßrige Dispersion. Durch Verdünnen mit Wasser erhält man eine wäßrige Dispersion.

IX. 20 Gew.-Teile der Mischung 1 werden mit 2 Gew.-Teilen Calciumsalz der Dodecylbenzolsulfonsäure, 8 Gew.-Teilen Fettalkoholpolyglykolether, 2 Gew.-Teilen Natriumsalz eines Phenolsulfonsäure-harnstoff-formaldehyd-kondensats und 68 Gew.-Teilen eines paraffinischen Mineralöls innig vermischt. Man erhält eine stabile ölige Dispersion.

Die erfindungsgemäßen Mittel können in diesen Anwendungsformen auch zusammen mit zusätzlichen anderen Wirkstoffen vorliegen, wie z.B. Herbiziden, Insektiziden, Wachstumsregulatoren und Fungiziden, oder auch mit Düngemitteln vermischt und ausgebracht werden. Beim Vermischen mit Fungiziden erhält man dabei in vielen Fällen eine Vergrößerung des fungiziden Wirkungsspektrums.

Anwendungsbeispiel 1

Wirksamkeit gegen Pyrenophora teres

Gerstenkeimlinge der Sorte "Igri" wurden im Zweiblattstadium mit wäßrigen Suspensionen, die 80 % Wirkstoff und 20 % Emulgator in der Trockensubstanz enthielten, tropfnaß gespritzt. Nach 24 Stunden wurden die Pflanzen mit einer Sporensuspension des Pilzes Pyrenophora teres inokuliert und für 48 Stunden in eine Klimakammer mit hoher Luftfeuchtigkeit bei 18°C gestellt. Anschließend wurden die Pflanzen im Gewächshaus bei 20-22°C und 70 % relativer Luftfeuchtigkeit für weitere 5 Tage kultiviert. Dann wurde das Ausmaß der Symptomentwicklung ermittelt.

Die Auswertung erfolgte durch Angabe des Wirkungsgrades, errechnet nach folgender Formel (Abbott).

$$\text{Wirkungsgrad} = \left(1 - \frac{\text{\% Befall in Behandelt}}{\text{\% Befall in Unbehandelt}}\right) \times 100$$

| Wirkstoff Nr. | Aufwandmenge .. ppm | Wirkungsgrad .. % |
|---|---|---|
| Fenpropimorph | 125 | 50 |
| 1 | 125 | 0 |
| Fenpropimorph + 1 | 125<br>125 | 75 |

Anwendungsbeispiel 2

Wirksamkeit gegen Rebenperonospora

Blätter von Topfreben der Sorte "Müller Thurgau" wurden mit wäßriger Spritzbrühe, die 80 % Wirkstoff und 20 % Emulgiermittel in der Trockensubstanz enthielten, besprüht. Um die Wirkungsdauer der Wirkstoffe beurteilen zu können, wurden die Pflanzen nach dem Antrocknen des Spritzbelages 8 Tage im Gewächshaus aufgestellt. Erst dann wurden die Blätter mit einer Zoosporenaufschwemmung von Plasmopara viticola (Rebenperonospora) inoculiert. Danach wurden die Reben zunächst für 48 Stunden in einer wasserdampfgesättigten Kammer bei 24°C und anschließend für 5 Tage in einem Gewächshaus mit Temperaturen zwischen 20 und 30°C aufgestellt. Nach dieser Zeit wurden die Pflanzen zur Beschleunigung des Sporangienträgerausbruches abermals für 16 Stunden in der feuchten Kammer aufgestellt. Dann erfolgte die Beurteilung des Ausmaßes des Pilzausbruches auf den Blattunterseiten.

Die Auswertung erfolgte durch Angabe des Wirkungsgrades, errechnet nach der Formel von Abbott.

| Wirkstoff Nr. | Aufwandmenge .. ppm | Wirkungsgrad .. % |
|---|---|---|
| Fenpropimorph | 500 | 0 |
| 1 | 500 | 25 |
| Fenpropimorph + Wirkstoff 1 | 500<br>500. | 37,5 |

Anwendungsbeispiel 3

Ein Liter einer wäßrigen Lösung, die 3 g/Liter Malz-Extrakt, 3 g/Liter Hefe-Extrakt, 5 g/Liter Bacto-Pepton und 10 g Glucose/Liter enthält, wird mit dem Pilz des Mais-Beulenbrandes (Ustilago maydis) beimpft und anschließend bei 23°C für 18 Stunden geschüttelt. Zur Prüfung der fungiziden Wirksamkeit der einzelnen Wirkstoffe werden diese in Ethanol gelöst und der wäßrigen Lösung vor der Impfung mit dem Pilz zugesetzt. Nach 18 Stunden wurde die Menge der Pilzkultur in der wäßrigen Lösung (Trockengewicht) spektroskopisch bestimmt durch Messung bei 540 nm und anschließenden Vergleich mit einer Eichkurve. Die prozentuale Wachstumshemmung wurde relativ zum Wert der nur mit Ethanol (ohne Wirkstoff) versetzten Flüssigkultur berechnet. Der Wert der Wachstumshemmung in der Flüssigkeit ohne Wirkstoff wird auf 0 % festgesetzt. Konzentrationsangaben der Wirkstoffe in Mol/Liter. Wachstumshemmung in %.

| Wirkstoff | Konzentration | Wachstumshemmung gefunden | Wachstumshemmung berechnet (Summe der Einzelwirkungen) | Mischungsverhältnis Wirkstoff:Fenpropimorph |
|---|---|---|---|---|
| 1 | $5x10^{-7}$ | 0 | | |
| Fenpropimorph | $5x10^{-9}$ | 0 | | |
| 1<br>+ Fenpropimorph | $5x10^{-7}$<br>+ $5x10^{-9}$ | 16 | 0 | 100:1 |
| 1 | $1x10^{-6}$ | 0 | | |
| Fenpropimorph | $1x10^{-8}$ | 9 | | |
| 1<br>+ Fenpropimorph | $1x10^{-6}$<br>+ $1x10^{-8}$ | 42 | 9 | 100:1 |
| 1 | $5x10^{-6}$ | 0 | | |
| Fenpropimorph | $5x10^{-8}$ | 34 | | |
| 1<br>+ Fenpropimorph | $5x10^{-6}$<br>+ $5x10^{-8}$ | 78 | 34 | 100:1 |

Anwendungsbeispiel 4

Wirksamkeit gegen Bohnenrost

Blätter von Buschbohnen der Sorte "Fori" im Primärblattstadium wurden mit wäßriger Spritzbrühe, die 90 % Wirkstoff und 10 % Emulgiermittel in der Trockensubstanz enthielt, besprüht. Nach Antrocknen des Spritzbelages wurden die Pflanzen 24 h lang bei 18°C im Gewächshaus aufgestellt. Nach der Inokulation mit einer wäßrigen Uredosporensuspension des Bohnenrostes (Uromyces appendiculatus) wurden die Pflanzen 24 h lang in einer Klimakammer mit hoher Luftfeuchtigkeit bei 16°C gehalten und anschließend im Gewächshaus bei 20 bis 22°C aufgestellt. Die Beurteilung des Ausmaßes der Pustelbildung auf den Primärblättern wurde 13 Tage nach der Inokulation vorgenommen.

Auswertung durch Angabe des Wirkungsgrades errechnet nach folgender Formel (Abbott):

$$\text{Wirkungsgrad} = 1 - \frac{\text{\% Befall in Behandelt}}{\text{\% Befall in Unbehandelt}} \times 100$$

| Wirkstoff | Aufwandmenge .. ppm | Wirkungsgrad .. % |
|---|---|---|
| Fenpropimorph | 5 | 17 |
| | 10 | 44 |
| Naftifin (Wirkstoff 1 aus Tabelle 1) | 1 | 0 |
| | 20 | 6 |
| | 50 | 6 |
| | 100 | 22 |
| Fenpropimorph + Naftifin | 5 + 1 | 44 |
| | 5 + 20 | 44 |
| | 5 + 50 | 67 |
| | 5 + 100 | 69 |
| | 10 + 1 | 50 |
| | 10 + 20 | 67 |
| | 10 + 50 | 69 |
| | 10 + 100 | 86 |

## Patentansprüche

1. Synergistisch Wirkende Fungizide Mischung aus
   a) einer Verbindung der Formel I

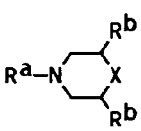

I

in der

$R^a$ = Tridecyl ($C_{13}H_{27}$-Isomerengemisch), 3(p-tert.-Butyl(phenyl)-2-methyl-propyl,

$R^b$ = H, $CH_3$ (cis- bzw. trans-ständig) und

X = 0, $CH_2$ bedeutet,

und

b) einer Verbindung der Formel II

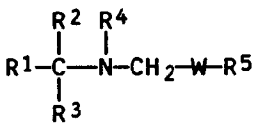

II

in der

$R^1$ gegebenenfalls einfach bis dreifach durch $C_1$-$C_4$-Alkyl, $C_2$-$C_4$-Alkenyl-, $C_3$-$C_4$-Alkinyl-, $C_2$-$C_6$-Alkoxyalkyl, Halogen, Hydroxy, $C_1$-$C_4$-Alkoxy, Cyano substituiertes Phenyl, Naphthyl, Tetrahydronaphthyl, Benzothiophenyl, Benzofuranyl, Anthracenyl, Acenaphthenyl, Hexahydroindacenyl, Tetrahydrophenanthrenyl, Stilbenyl, Benzodioxolanyl,

$R^2$ Wasserstoff, Methyl

$R^3$ Wasserstoff,

$R^4$ $C_1$-$C_3$-Alkyl, Cyclopropyl, $C_2$-Halogenalkyl, $C_3$-Alkenyl

W einen $C_2$-Alkenylenrest, $C_2$-Fluor-alkenylenrest

$R^5$ gegebenenfalls einfach bis dreifach durch Halogen, $C_1$-$C_4$-Alkyl, Hydroxy, $C_1$-$C_5$-Alkoxy substituiertes Phenyl, Naphthyl, gegebenenfalls einfach bis dreifach durch Hydroxy, $C_1$-$C_5$-Alkoxy, $C_3$-$C_6$-Cycloalkyl, Aryl, Thiophenyl, Cyano, Halogen substituiertes $C_3$-$C_8$-Alkenyl oder $C_3$-$C_8$-Alkinyl bedeutet.

2. Fungizid, enthaltend die Verbindungen a) und die Verbindungen b) in einer eine synergistische Fungizidwirkung erzeugenden Menge.

3. Fungizide Mischung gemäß Anspruch 1, enthaltend als Verbindung a) Fenpropimorph und als Verbindung b) die Verbindung, in der $R^1$ 1-Naphthyl, $R^2$ Wasserstoff, $R^3$ Wasserstoff, $R^4$ Methyl, W Ethenylen und $R^5$ Phenyl, bedeutet.

4. Verfahren zur Bekämpfung von Pilzen, dadurch gekennzeichnet, daß man die Pilze oder die vom Pilzbefall bedrohten Pflanzen, Saatgüter, Materialien oder den Boden mit einer fungizid wirksamen Menge einer Mischung gemäß Anspruch 1 behandelt.

5. Verwendung einer Mischung gemäß Anspruch 1, zur Bekämpfung von Pilzen.

6. Mischung gemäß Anspruch 3, enthaltend die beiden Wirkstoffe im Gewichtsverhältnis 1:5 bis 1:1.

## Claims

1. A synergistic fungicidal mixture of

a) a compound of the formula I

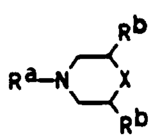

I

where

$R^a$ is tridecyl ($C_{13}H_{27}$ isomer mixture) or 3-(p-tert-butylphenyl)-2-methylpropyl,

$R^b$ is H or $CH_3$ (cis- or trans-position) and

X is O or $CH_2$,

and

b) a compound of the formula II

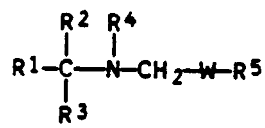

II

where

R¹ is phenyl, naphthyl, tetrahydronaphthyl, benzothiophenyl, benzofurangi, anthracenyl, acenaphthenyl, hexahydroindacenyl, tetrahydrophenanthrenyl, stilbenyl or benzodioolanyl, each of which is unsubstituted or monosubstituted to trisubstituted by $C_1$-$C_4$-alkyl, $C_2$-$C_4$-alkenyl, $C_3$-$C_4$-alkynyl, $C_2$-$C_6$-alkoxyalkyl, halogen, hydroxyl, $C_1$-$C_4$-alkoxy or cyano,

$R^2$ is hydrogen or methyl,

$R^3$ is hydrogen,

$R^4$ is $C_1$-$C_3$-alkyl, cyclopropyl, $C_2$-haloalkyl or $C_3$-alkenyl,

W is a $C_2$-alkenyl radical or $C_2$-fluoroalkenyl radical,

$R^5$ is a phenyl or naphthyl, each of which is unsubstituted or monosubstituted to trisubstituted by halogen, $C_1$-$C_4$-alkyl, hydroxyl or $C_1$-$C_5$-alkoxy, or $C_3$-$C_8$-alkenyl or $C_3$-$C_8$-alkynyl, each of which is unsubstituted or monosubstituted to trisubstituted by hydroxyl, $C_1$-$C_5$-alkoxy, $C_3$-$C_6$-cycloalkyl, aryl, thiophenyl, cyano or halogen.

2. A fungicide, containing the compounds a) and the compounds b) in an amount producing a synergistic fungicidal effect.

3. A fungicidal mixture as claimed in claim 1, containing fenpropimorph as compound a) and the compound in which $R^1$ is 1-naphthyl, $R^2$ is hydrogen, $R^3$ is hydrogen, $R^4$ is methyl, W is ethenylene, and $R^5$ is phenyl as compound b).

4. A method for combating fungi, which comprises treating the fungi or the plants, seeds, materials or the soil threatened by fungal attack with a fungicidal amount of a mixture as claimed in claim 1.

5. The use of a mixture as claimed in claim 1 for combating fungi.

6. A mixture as claimed in claim 3, containing the two active compounds in a weight ratio from 1:5 to 1:1.

## Revendications

1. Mélange fongicide à activité synergique, constitué de

a) un composé de la formule I

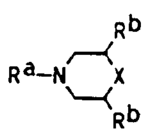

I

dans laquelle

$R^a$ représente un radical tridécyle (mélange d'isomères $C_{13}H_{27}$), un radical 3-p-tert-butyl (phényl)-2-méthyl-propyle,

$R^b$ représente un atome d'hydrogène, le radical $CH_3$ (en position cis ou trans) et

X représente un atome d'oxygène, le radical $CH_2$

et

b) un composé de la formule II

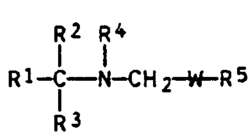

II

dans laquelle

- $R^1$ représente un radical benzodioxolanyle, stylbényle, tétrahydrophénatrényle, hexahydroindacényle, acénénaphtényle, anthracényle, benzofurannyle, benzothiophényle, tétrahydronaphtyle, naphtyle, phényle, éventuellement substitué 1 à 3 fois par des radicaux alkyle en $C_1$-$C_4$, alcényle en $C_2$-$C_4$, alcynyle en $C_3$-$C_4$, alcoxy($C_2$-$C_6$)alkyle, hydroxyle, alcoxy en $C_1$-$C_4$, des atomes d'halogènes,
- $R^2$ représente un atome d'hydrogène ou le radical méthyle,
- $R^3$ représente un atome d'hydrogène,
- $R^4$ représente un radical alkyle en $C_1$-$C_3$, cyclopropyle, halogénoalkyle en $C_2$, alcényle en $C_3$,
- W représente un radical alcénylène en $C_2$, fluoralcénylène en $C_2$,
- $R^5$ représente un radical naphtyle, phényle, éventuellement 1 à 3 fois substitué par des atomes d'halogènes, des radicaux alkyle en $C_1$-$C_4$, hydroxyle, alcoxy en $C_1$-$C_5$, un radical alcényle en $C_3$-$C_8$ ou alcynyle en $C_3$-$C_8$, éventuellement substitué par des atomes d'halogènes, des radicaux hydroxyle, alcoxy en $C_1$-$C_5$, cycloalkyle en $C_3$-$C_6$, aryle, thiophényle, cyano.

**2.** Fongicide contenant les composés a) et les composés b) en une proportion conférant une activité fongicide synergique.

**3.** Mélange fongicide suivant la revendication 1, contenant, à titre de composé a), du fenpropimorphe et, à titre de composé b), le composé dans lequel $R^1$ représente un groupe 1-naphtyle, R représente un atome d'hydrogène, $R^3$ représente un atome d'hydrogène, $R^4$ représente le radical méthyle, W représente le radical éthénylène et $R^5$ représente le radical phényle.

**4.** Procédé de lutte contre les champignons, caractérisé en ce que l'on traite les champignons, ou le sol ou la terre, ou les matériaux, semences et plantes susceptibles de subir une attaque par des champignons, par une proportion fongicide efficace d'un mélange suivant la revendication 1.

**5.** Utilisation d'un mélange selon la revendication 1 pour la lutte contre les champignons.

**6.** Mélange suivant la revendication 3, caractérisé en ce qu'il contient les deux principes actifs dans le rapport pondéral 1:5 à 1:1.